# EUROPEAN PATENT APPLICATION

(11) **EP 2 966 032 A1**
(43) Date of publication of application: **13.01.2016**
(21) Application number: 13877346.0
(22) Date of filing: 11.12.2013
(51) Int. Cl.: B67D 3/00, F16K 31/20, F16K 33/00

(54) **WATER DISPENSER**

(30) Priority: 05.03.2013 JP 2013042659
(71) Applicant: Kabushiki Kaisha Cosmo Life, Kakogawa-shi Hyogo 675-0032 (JP)
(72) Inventor: ORITA Yoshinori, Kakogawa-shi Hyogo 675-0068 (JP)
(74) Representative: Grünecker Patent- und Rechtsanwälte PartG mbB
(86) International application number: PCT/JP2013/083231
(87) International publication number: WO 2014/136345

(57) **Abstract**

A water dispenser is provided in which drinking water in a raw water container is fed by gravity into a temporary tank through a water fall line, and which is configured such that a negative pressure created in the raw water container is never balanced with the water fall pressure. The interior of a piercing rod (21) piercing through a plug (14) of the raw water container (10) is partitioned into an water passage (22) and an air passage (23) that extend into the raw water container (10) such that the air passage (23) extends from a starting end opening (25) which is smaller than a starting end opening (24) of the water passage (22) into the temporary tank (30). The air passage (23) is opened and closed by a float valve (40) including a valve body (44), and a float (43) afloat on the water in the temporary tank (30) and coupled to the valve body (44). With this arrangement, when a negative pressure is created in the raw water container (10) due to overshooting, and the valve body (44) is pushed upward by air in a valve case pipe (42), the valve body (44) is forcibly moved to the position corresponding to the water level in the temporary tank (30).

## Description

### TECHNICAL FIELD

This invention relates to a water dispenser used to supply drinking water, such as mineral water, stored in a replaceable raw water container.

### BACKGROUND ART

While water dispensers have been used mainly in offices and hospitals, due to people's growing interest in safety of water and health, a growing number of water dispensers are now being used in ordinary households too. Typically, water dispensers are configured such that drinking water in the raw water container is fed into a temporary tank, and kept at a desired temperature in the temporary tank. A beverage discharge line is connected to the temporary tank through which water in the tank can be discharged outside. When a user operates a lever or a cock, a valve provided at the boundary between the temporary tank and the beverage discharge line opens, so that temperature-adjusted drinking water can be discharged into e.g. a cup.

Among such water dispensers, there is a water dispenser of the type in which the raw water container is placed at a level higher than the temporary tank, and the drinking water in the raw water container is fed by gravity through a water fall line. The water fall line includes a piercing rod which is pierced through a plug portion of the raw water container with the mouth of the raw water container facing downward. Drinking water leaving the water fall line drops into the temporary tank. In order to control the water level in the temporary tank, a float valve is provided which is configured to automatically stop the supply of water from the water fall line. The valve body and the float of this float valve are substantially different in size from each other, and the dimensional accuracies required for these two parts are also widely different from each other. Thus, these two parts are manufactured separately from each other. The valve body is a floating valve body, which means that the valve body is not coupled to the float, and is freely movable between a valve seat in a valve case pipe portion of the water fall line and the float. The float is made of e.g. a synthetic resin that is harmless to humans and corrosion-resistant, a silicone resin or rubber.

In many of today's water dispensers, raw water containers having a variable-volume container body holding drinking water are used. Such a variable-volume container is spontaneously collapsible under atmospheric pressure as the water remaining decrease. Even though the volume of the raw water container is variable, it cannot be spontaneously collapsed beyond a certain limit. However, after reaching the limit, the raw water container tends to be temporarily further collapsed beyond the limit due to overshooting resulting from pressure that tends to flow down drinking water through the water fall line (this pressure is hereinafter referred to as the "water fall pressure"). Thereafter, the volume of the raw water container slightly increases due to the self-recovery force of the raw water container, thus creating a negative pressure in the raw water container. Due to the negative pressure, air in the temporary tank tends to be sucked into the raw water container through the water fall line. However, while the water fall pressure is balanced with the negative pressure, no water can fall from the water fall line, and thus air cannot be sucked into the raw water container. As result, the negative pressure does not disappear, and water cannot be fed under gravity.

The applicant proposed a technique by which when the negative pressure in the raw water container is balanced with the water fall pressure, air in the temporary tank can be easily sucked into the raw water container through an air passage which is one of divided passages in the water fall line (in the below-identified Patent document 1).

### PRIOR ART DOCUMENT(S)

### PATENT DOCUMENT(S)

Patent document 1: JP Patent Publication 2010-228807A

### SUMMARY OF THE INVENTION

### OBJECT OF THE INVENTION

However, even in the water dispenser disclosed in Patent document 1, it is impossible to completely prevent a phenomenon in which water stops falling from the water fall line while drinking water still remains in the raw water container. That is, if the negative pressure resulting from overshooting is lower than expected because drinking water is dropped at a low rate over a long period of time, due to variations in the degree of collapsing from one raw water container to another, or due to fluctuations in ambient temperature, the negative pressure could be balanced with the water fall pressure. If this happens, a user has to push the raw water container by hand from above the raw water container to manually further collapse the raw water container, thereby creating a sufficiently high negative pressure in the raw water container thereafter so that air can be sucked into the raw water container.

In order to minimize variations in the degree of collapsing from one raw water container to another, thereby creating a constant negative pressure in every raw water container, bellows-like or straight slant fold lines could be formed on the side wall of every raw water container so that the raw water container is collapsible precisely along the fold lines.

However, such a raw water container could still be deformed in an unintended manner, thus making it impossible to completely prevent variations in negative pressure created in one raw water container to another, because the fold lines could be deformed if an operator incorrectly holds the raw water container when placing the raw water container in position, or the raw water container could be placed in an inclined position.

An object of the present invention is to provide a water dispenser configured such that drinking water in the raw water container is fed by gravity into the temporary tank through the water fall line, and the negative pressure created in the raw water container is never balanced with the water fall pressure.

### MEANS FOR ACHIEVING THE OBJECT

In order to achieve this object, the inventor of the present application first tried to create a negative pressure in the raw water container that is always higher than the water fall pressure, irrespective of variations from one raw water container to another, by increasing the rate of water passing through the water fall line, thereby increasing the overshoot after the raw water container has collapsed to the limit.

Surprisingly, however, the inventor discovered that even if the negative pressure is sufficiently high, drinking water could still stop falling from the water fall line. The inventor tried to find why this happens, and discovered that drinking water stops falling from the water fall line, not because, as in the above-described conventional cases, the negative pressure created is so low that it is balanced with the water fall pressure, but for completely different reasons. That is, the valve case pipe portion in which the floating valve body is movable has an inner diameter of typically 7 mm or less. The floating valve body is typically made of a material low in specific gravity, such as synthetic resin or silicone resin, and its diameter is typically about 5 mm. While the float valve is open, and until immediately before air is sucked in from the temporary tank, the interior of the valve case pipe portion is completely filled with water. When a negative pressure is created in the raw water container in this state, air tends to be sucked into the raw water container together with the drinking water filling the valve case pipe portion. Under the influence of the surface tension of the drinking water filling the valve case pipe portion and surrounding the valve case pipe portion, the air being sucked in cannot pass through the space between the floating valve body and the inner peripheral wall surface of the valve case pipe portion in the form of air bubbles. Thus, if a high negative pressure is created in this state, the drinking water in the valve case portion is moved upstream together with the floating valve body by the air. As a result, the floating valve body is moved away from the float, which supports the floating valve body without being coupled thereto, and reaches the valve seat, so that the float valve is untimely locked in the closed position, preventing air from being sucked into the raw water container.

In order to prevent the float valve from being locked in the closed position, the inventor first considered using a heavier floating valve body so that even when a high negative pressure is created, the weight of the floating valve body overcomes the surface tension of the drinking water in the valve case pipe portion, and thus the floating valve body does not move away from the float. In particular, the inventor tried to increase the floating valve body from an advanced material known as "high-specific-gravity metal". However, this floating valve body was too small to obtain a stable effect.

In order to achieve the above object, the present invention provides a water dispenser comprising a replaceable raw water container, a water fall line including a valve case pipe portion, and a temporary tank, wherein the raw water container, the water fall line, and the temporary tank are configured such that drinking water in the raw water container can be fed by gravity into the temporary tank through the water fall line, wherein the water dispenser further comprises a float valve capable of automatically stopping the supply of water from the water fall line, wherein the float valve comprises a float configured to be kept afloat on drinking water in the temporary tank, and a valve body movable in the valve case pipe portion, wherein the raw water container is configured to be spontaneously collapsed as the amount of drinking water remaining in the raw water container decreases, and thereafter tend to suck in air in the temporary tank by the self-recovery force of the raw water container, wherein the float is operatively coupled to the valve body such that the valve body is forcibly moved to a position corresponding to a water level in the temporary tank, by the weight of the float.

In particular, if the negative pressure created in the raw water container is sufficiently higher than the water fall pressure, air sucked in from inside the temporary tank tends to move the valve body upstream together with the drinking water filling the valve case pipe portion. At this time, since the float is coupled to the valve body, the float is also pulled. Thus, the valve body is pulled downstream by the weight of the float. Since the float is in the temporary tank, the float can be formed so as to have a sufficiently large volume. Such a large float can pull the valve body with a force larger than the surface tension of the drinking water surrounding the valve body in the valve case pipe portion. With this arrangement, since the valve body is forcibly moved to the position corresponding to the water level in the temporary tank, the float valve will never be unduly locked in the closed position. It is therefore possible to prevent the negative pressure from being balanced with the water fall pressure, by creating a sufficiently high negative pressure in the raw water container, irrespective of how drinking water is used, variations from one raw water container to another, etc.

As the water fall line, the one disclosed in Patent document 1 is preferably used. That is, the water fall line preferably includes a piercing rod pierced through the plug portion of the raw water container. The piercing rod has an interior space divided into a water passage and an air passage which communicate with the interior of the raw water container, the water passage has a starting end opening, and the air passage has a starting end opening smaller than the starting end opening of the water passage, wherein the air passage extends from the starting end opening of the air passage to the interior of the temporary tank, independently of the water passage. In this arrangement, in order to control the water level in the temporary tank, it is necessary to use valves to open and close the air passage and the water passage. If the negative pressure is balanced with the water fall pressure while the valves are open, the air passage serves to spontaneously break this balance. This is presumably because pressure variations tend to occur between the air passage, which has a relatively small starting end opening, and the raw water container, so that the pressure balance between the negative pressure and the water fall pressure is slightly broken due to the pressure variations, which causes the drinking water in the air passage to fall into the temporary tank, so that air in the temporary tank flows into the air passage, and then into the raw water container through the starting end opening of the air passage in the form of air bubbles, and as a result, the negative pressure disappears.

According to the present invention, as described above, since a negative pressure is created that is high enough to cause the valve body to be forcibly moved to the position corresponding to the water level, the negative pressure will never be balanced with the water fall pressure immediately after the negative pressure is created. However, since the negative pressure gradually decreases as air is sucked into the raw water container under the negative pressure, the rate of air sucked in also gradually decreases. Thus, especially immediately before the negative pressure disappears, the negative pressure could be accidentally balanced with the water pressure.

However, according to the present invention, since a float valve is provided to open and close the air passage, even if the negative pressure is accidentally balanced with the water pressure immediately before the negative pressure disappears, this balance is expected to be spontaneously broken due to breakage of the balance between the pressures in the air passage and in the raw water container. As a result, it is possible to prevent the negative pressure in the raw water container from being balanced with the water fall pressure from the moment the negative pressure is created in the raw water container until the negative pressure disappears.

A second valve for opening and closing the water passage may comprise a second float configured to be kept afloat on the water in the temporary tank, and a second valve body movable in the water passage, wherein the second valve body comprises a floating valve body not coupled to the second float. In this case, since the second valve body is not coupled to the second float, the second valve is relatively simple in structure.

How the valve body is coupled to the float is not limited. For example, the float of the float valve may be mounted to the temporary tank so as to be pivotable about a horizontal shaft. In this arrangement, the valve body is preferably coupled to the float, while being restricted by the valve case pipe portion, such that when the float is pivoted, the valve body is inclined relative to the float. With this arrangement, even though the float is pivoted as the water level in the temporary tank changes, the valve body can be moved up and down in the valve case pipe portion.

### ADVANTAGES OF THE INVENTION

The present invention provides a water dispenser configured such that drinking water in the raw water container is fed by gravity into the temporary tank through the water fall line, and having the above-described structure. With this arrangement, it is possible to prevent the negative pressure from being balanced with the water fall pressure, by creating a sufficiently high negative pressure in the raw water container, irrespective of how drinking water is used, variations from one raw water container to another, etc.

### BRIEF DESCRIPTION OF THE DRAWINGS

Fig. 1 is a sectional view of an entire water dispenser according to a first embodiment of the present invention.
Fig. 2 is an enlarged view of and around a float valve of Fig. 1.
Fig. 3 is a sectional view taken along line III-III of Fig. 2.
Fig. 4 is a sectional view of the float valve of Fig. 1 when the float valve is open.
Fig. 5 is a sectional view of the float valve of Fig. 1 when the float valve is closed.
Fig. 6 is a sectional view taken along line VI-VI of Fig. 5.
Fig. 7 is an enlarged view of a second valve according to a second embodiment of the present invention.

### BEST MODE FOR EMBODYING THE INVENTION

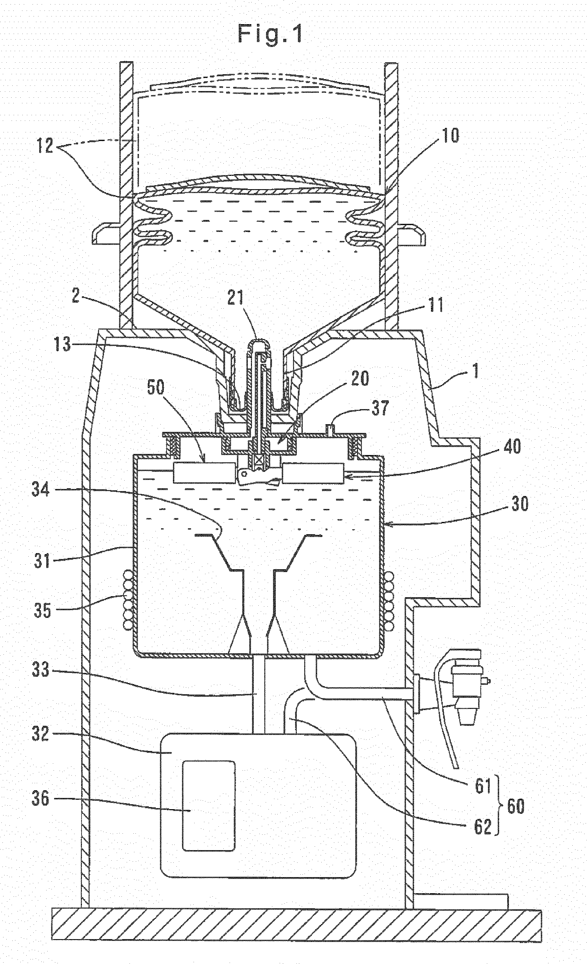

Fig. 1 shows a water dispenser according to a first embodiment of the present invention. This water dispenser includes a replaceable raw water container 10 which is placed in position in the upper portion of a housing 1, a temporary tank 30 arranged such that drinking water in the raw water container 10 is fed, under gravity, into the temporary tank 30 through a water fall line 20, a float valve 40 and a second valve 50 configured to automatically stop the supply of water from the water fall line 20, and water discharge lines 60 through which drinking water accumulated in the temporary tank 30 can be discharged outside the housing 1.

The housing 1 has an outer shell in which the temporary tank 30 is mounted. The water dispenser is used in such a place as an ordinary household, an office or a hospital, with the housing 1 placed horizontally. The housing 1 includes a container holder 2 on which the raw water container 10 can be placed with a container mouth 11 of the raw water container 10 facing downward. The container holder 2 is capable of supporting the raw water container 10 with the container mouth 11 facing downward until the raw water container 10 becomes empty.

In the temporary tank 30, drinking water falling from the water fall line 20 and air are present in lower and upper layers. The temperature of the drinking water in the temporary tank 30 is adjustable. With the raw water container 10 placed on the container holder 2, the temporary tank 30 is located under the raw water container 10.

The temporary tank 30 shown comprise a cold water tank portion 31 and a hot water tank portion 32 which are connected together through a tank connecting line 33. The hot water tank portion 32 is arranged under the cold water tank portion 31. Drinking water from the water fall line 20 entirely falls into the cold water tank portion 31. As the amount of drinking water in the hot water tank portion 32 decreases, drinking water in the cold water tank portion 31 that is located over a baffle 34 spontaneously flows into the hot water tank portion 32 through the tank connecting line 33. Thus, the upper limit of the water level in the temporary tank 30 is determined by the water level in the cold water tank portion 31.

A cooling device 35 is mounted to the outer periphery of the cold water tank portion 31 at its lower portion, and configured to cool the drinking water in the cold water tank portion 31 under the baffle 34 to a low temperature (about 0 to 10°C). Drinking water above the baffle 34 is kept at a temperature relatively close to normal temperature (namely about 15 to 25°C).

The hot water tank portion 32 is filled up with drinking water. A heating device 36 is mounted to the hot water tank portion 32 to heat the drinking water in the hot water tank portion 32 to a high temperature (about 90°C). The heating device 36 may comprise a sheath heater or a band heater. One of the cold water tank portion 31 and the hot water tank portion 32 may be omitted.

The water discharge lines 60 comprise a cold water discharge line 61 and a hot water discharge line 62 which are independent of each other. The cold water discharge line 61 and the hot water discharge line 62 are connected to the cold water tank portion 31 and the hot water tank portion 32 through externally operable cocks, respectively, such that by opening either one of the cocks, cold water in the lower portion of the cold water tank portion 31 or hot water in the upper portion of the hot water tank portion 32 can be discharged into e.g. a cup.

When drinking water is discharged from the hot water tank portion 32, the same amount of drinking water as discharged from the hot water tank portion 32 flows into the hot water tank portion 32 from the cold water tank portion 31 through the tank connecting line 33, so that the hot water tank portion 32 is always filled up with water. The capacity of the cold water tank portion 31 is smaller than that of the raw water container 10, and is about 2 to 4 liters. The water dispenser further includes an air passage 37 through which the interior of the cold water tank portion 31 communicates with the atmosphere. When drinking water is fed from the water fall line 20 or drinking water is discharged through one or both of the water discharge lines 60, and as a result, the water level in the temporary water tank 30 rises or falls, air is introduced into the tank 30, so that the interior of the temporary tank 30 is kept at the atmospheric pressure.

The raw water container 10 includes a variable-volume container body 12 configured such that a predetermined amount of drinking water can be fed into the container body 12 through the container mouth 11, and spontaneously collapsible under atmospheric pressure as the water remaining in the container body 12 decreases. The container body 12 can hold about 8 to 20 liters of water to the maximum. Before use, the container mouth 11 is sealed by a cap 13 fixed to the neck of the variable-volume container body 12. The central portion of the cap 13 forms a plug portion press-fitted in the vertical direction. Due to overshooting effect in which after the container body 12 becomes unable to spontaneously collapse, drinking water flows into the water fall line 20, a negative pressure is created in the raw water container 10, namely, the pressure in the raw water container 10 falls below the atmospheric pressure. When a negative pressure is created in the raw water container 10, the raw water container 10 is configured to suck air in the temporary tank 30 due to the self-restoring force of the raw water container 10. The variable-volume container body 12 may be formed by blow forming of polyethylene terephthalate (PET) resin or polyethylene (PE). The side wall of the variable-volume container body 12 is formed with fold lines in the form of a bellows (as shown by the solid line in Fig. 1) or fold lines crossing each other, so that the container body 12 can collapse in an orderly manner. This prevents a plurality of the replaceable raw water containers 10 from being collapsed in a widely different manner from each other.

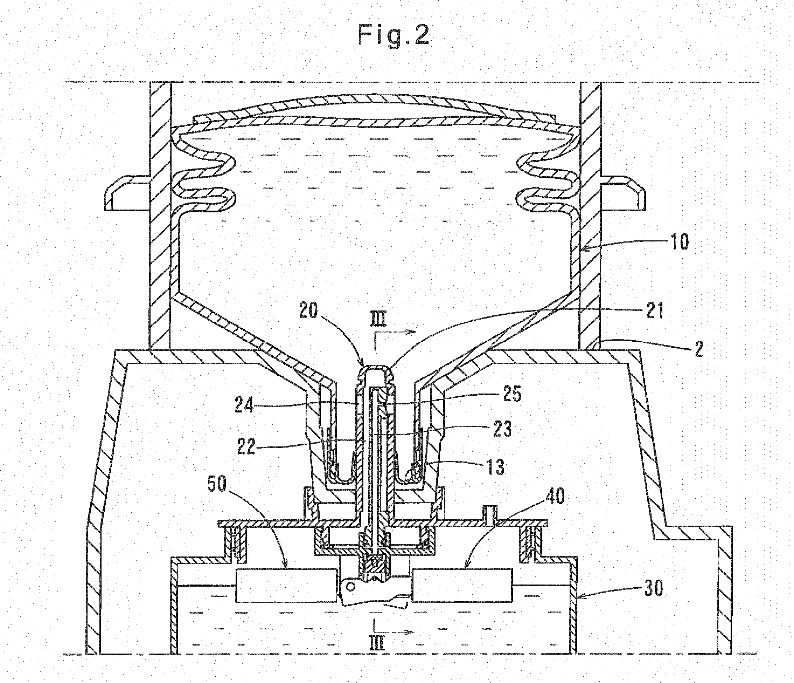

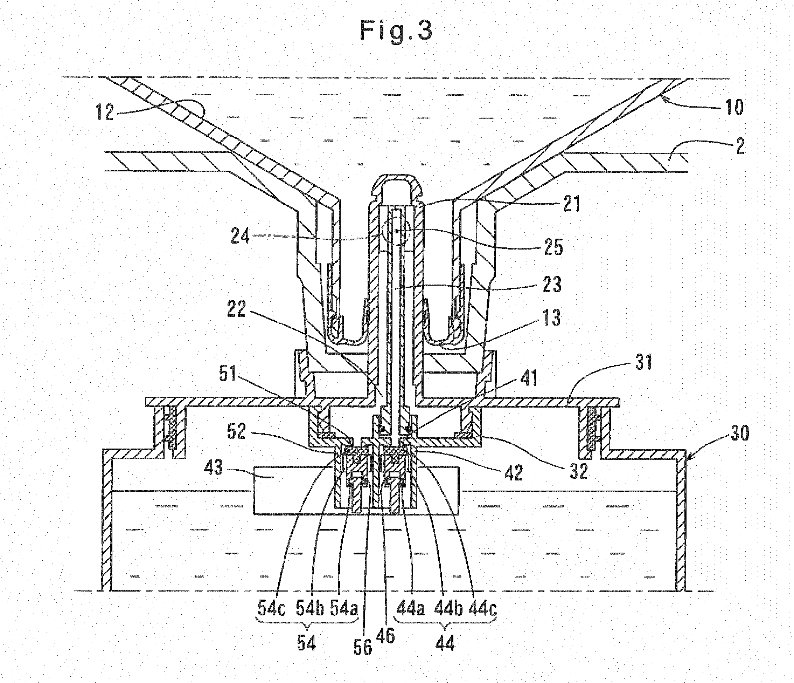

The water fall line 20 includes a piercing rod 21 piercing through the plug portion. As shown enlarged in Figs. 2 and 3, the water fall line 20 comprises a water passage 22 and an air passage 23. The float valve 40 is configured to open and close the air passage 23. The second valve 50 is configured to open and close the water passage 22.

When the raw water container 10 is lowered into the container holder 2, the piercing rod 21 is configured to pierce the plug portion of the cap 13 upwardly and protrude into the container mouth 11 as the water outlet, with the outer periphery thereof in close contact with the inner periphery of the cap 13.

The interior of the piercing rod 21 is divided into the water passage 22 and the air passage 23, which both communicate with the interior of the raw water container 10. The air passage 23 has a starting end opening 25 which is smaller than a starting end opening 24 of the water passage 22, and is a passage separate from the water passage 22 and extending into the temporary tank 30. With the raw water container 10 placed on the container holder 2, the starting end openings 24 and 25 are located inside the raw water container 10.

When water is discharged through one of the water discharge passages 60 to outside while the pressure in the raw water container 10 is not at a negative pressure relative to the atmospheric pressure, and the interior of the temporary tank 30 is at the atmospheric pressure, the water level in the temporary tank 30 drops, so that the float valve 40 and the second valve 50 open. As a result, drinking water flows through the starting end openings 24 and 25 into the water passage 22 and the air passage 23 and then into the temporary tank 30. That is, the same amount of water that has flowed through the starting end openings 24 and 25 into the water passage 22 and the air passage 23 falls into the temporary tank 30 from the water passage 22 and the air passage 23. Thus, air in the temporary tank 30 never rises through the water passage 22 or the air passage 23. Drinking water in the raw water container 10 is thus fed under gravity into the temporary tank 30 through the water fall line 20.

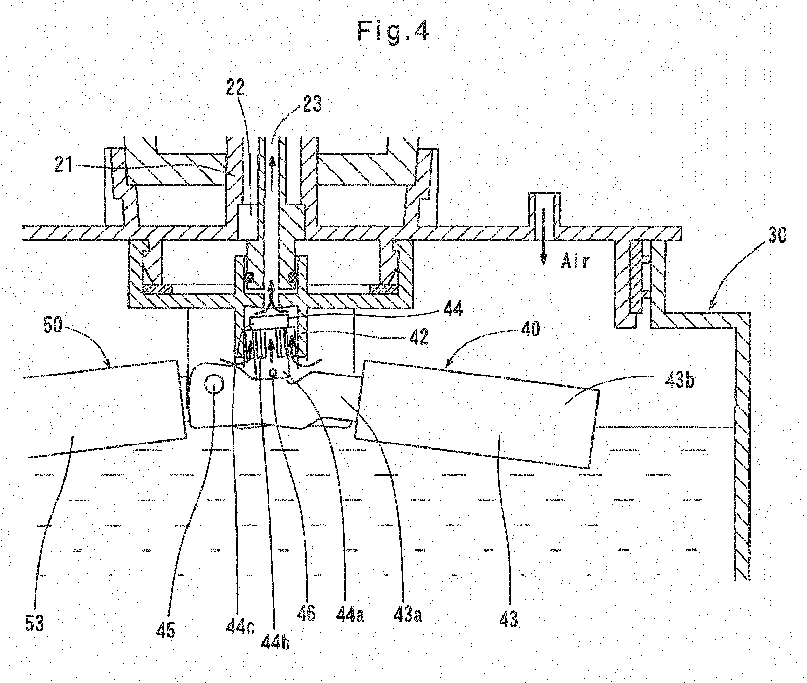

When the float valve 40 and the second valve 50 open, if the interior of the raw water container 10 is at a negative pressure and the negative pressure is higher than the water falling pressure in the raw water container 10, elastic recovery of the raw water container 10 tends to suck water in the water passage 22 and the air passage 23 back into the raw water container 10. As a result, as shown in Fig. 4, air in the temporary tank 30 is sucked into, and rises in, the water passage 22 and the air passage 23. The air is then released into the raw water container 10 through the starting end openings 24 and 25, shown in Figs. 2 and 3. The air is thus sucked into the raw water container 10 in the form of air bubbles.

Even after the negative pressure and the water falling pressure, in the raw water container 10, balance with each other, drinking water in the air passage 23 tends to drop into the temporary tank 30 due to pressure fluctuations between the air passage 23, of which the starting end opening 25 is relatively small, and the raw water container 10, so that air in the temporary tank 30 tends to be introduced into the raw water tank 10. This effect is expected by setting the minimum flow sectional area at the starting end opening 25 to be 1/5 or less, preferably 1/10 or less, of the minimum flow sectional area at the pipe portion of the air passage 23. The "pipe portion" refers to a portion of the air passage 23 having an inner wall extending the entire circumference when taken along a flow section perpendicular to the axis of the air passage 23. If the starting end opening 25 is a circular hole, the hole has a diameter of 3 mm or less, preferably 1.5 mm or less.

As shown in Figs. 3, 5 and 6, valve seats 41 and 51 are provided in the air passage 23 and the water passage 22, respectively. Valve case pipe portions 42 and 52 extend downwardly from the respective valve seats 41 and 51 so as to be integral with the valve seats 41 and 51. The air passage 23, which includes the valve case pipe portion 42, has a flow axis extending in the vertical direction so that air in the temporary tank 30 can easily flow into the raw water container 10.

The float valve 40 includes a float 43 afloat on the water in the temporary tank 30, and a valve body 44 movable in the valve case pipe portion 42. The second valve 50 is another float valve, including a second float 53 afloat on the water in the temporary tank 30, and a second valve body 54 movable in the valve case pipe portion 52. The second valve 50 is identical in structure to the float valve 40 so that any component of one of the valves 40 and 50 can be used in the other of the valves 40 and 50. In particular, the valve seat 51 of the second valve 50, the inner wall surface of the valve case pipe portion 52, the second float 53 and the second valve body 54 are identical, respectively, to the valve seat 41 of the float valve 40, the inner wall surface of the valve case pipe portion 42, the float 43 and the valve body 44. Since the components of one of the float valve 40 and the second valve 50 are identical to the corresponding components of the other of the valves 40 and 50, the valves 40 and 50 can be manufactured at a low cost, and also, it is possible to prevent any valve component from being mounted in the wrong valve. Now, only the float valve 40 is described in detail. Any element of the second valve 50 that is identical to the corresponding element of the float valve 40 is indicated by a corresponding numeral, and its description is omitted.

As shown in Fig. 3, the valve case pipe portions 42 and 52 form vertically extending pipes having inner peripheral surface each having a circular cross section. The valve case pipe portions 42 and 52 are integrally formed on a cup member 32 fitted to the lower surface of a top lid 31 of the temporary tank 30. The portion of the water passage 22 upstream of the valve seat 51 is far larger, i.e. larger in horizontal sectional area, than the portion of the air passage 23 upstream of the valve seat 41. Thus, even though the float valves 40 and 50 are identical in structure, larger amount of drinking water can be fed into the temporary tank 30 through the water passage 22 than through the air passage 23.

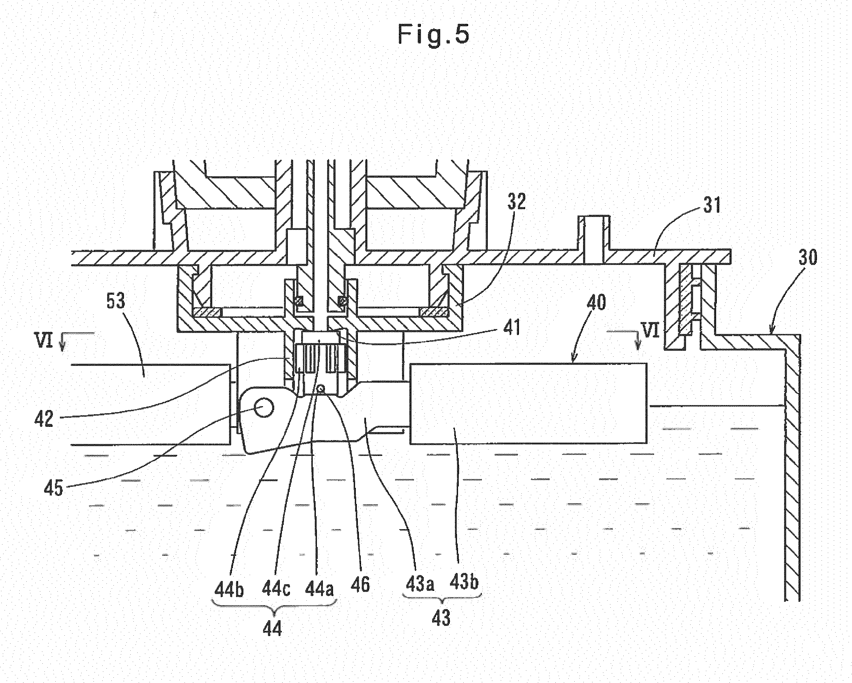

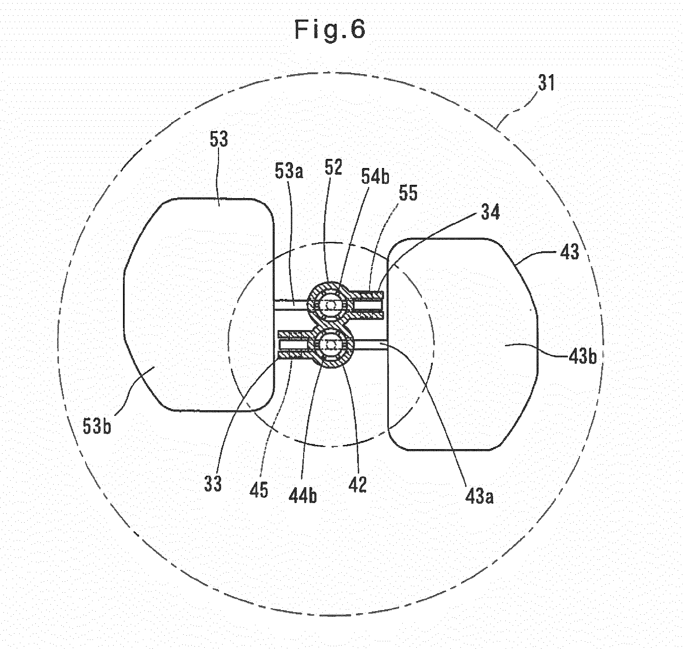

As shown in Figs. 5 and 6, the floats 43 and 53 have arm portions 43a and 53a mounted to the temporary tank 30 so as to be pivotable about horizontal shafts 45 and 55 provided on the arm portions 43a and 53a, respectively. The cup member 32 is provided with bearing portions 33 and 34 in which the respective horizontal shafts 45 and 55 are fitted. The floats 43 and 53 include main float bodies 43b and 53b on the ends of the respective arm portions 43a and 53a opposite from the respective horizontal shafts. The portion of each main float body 43b, 53b that is in contact with the water surface in the temporary tank 30 has a horizontal sectional area larger than the portion of the corresponding arm portion 43a, 53a that is in contact with the water surface. The main float bodies 43b and 53b contribute to both increases in buoyancy and weight of the respective floats 43 and 53. The arm portions 43a and 53a and the main float bodies 43b and 53b are formed of synthetic resin, separately from each other.

The arm portions 43a and 53a extend under the respective valve case pipe portions 42 and 52. The main float bodies 43b and 53b are disposed on the respective opposite sides of a plane including the valve case pipe portions 42 and 52. This arrangement ensures large horizontal sectional areas of the main float bodies 43b and 53b, even if the valve case pipe portions 42 and 52 are connected together in parallel to each other by a common partition wall.

As shown in Figs. 3 and 5, each valve body 44, 54 comprises a joint portion 44a, 54a coupled to the corresponding float 43, 53, guided portions 44b, 54b guided by the corresponding valve case pipe portion 42, 52 in the direction of the flow axis, and a sealing portion 44c, 54c configured to be pressed against the valve seat 41, 51. Each of the valve bodies 44 and 54 is an integral member movable in the valve case pipe portion 42, 52, or comprise a plurality of members movable in the valve case pipe portion 42, 52 as though an integral body.

The joint portion 44a, 54a and the guided portions 44b, 54b, of each valve body 44, 54 are formed integral with each other from a hard synthetic resin, forming a high-strength member. Hard synthetic resins usable for this purpose include general-purpose plastics such as polypropylene and polyester. The sealing portions 44c and 54c are made of a soft material such as a silicone, and fixed to the respective guided portions 44b and 54b. The guided portions 44b, 54b and the sealing portion 44c, 54c, of each valve body 44, 54 are inserted into the valve case pipe portion 42, 52 from under the valve seat 41, 51.

The joint portion 44a, 54a of each valve body 44, 54 is coupled to the corresponding arm portion 43a, 53a through pivot shafts 46, 56 extending in the same direction as the horizontal shafts 45 and 55. The pivot shafts 46 and 56 are formed integral with the respective arm portions 43a and 53a so as to be disposed on the extensions of the flow axes of the respective valve case pipe portions 42 and 52. Each joint portion 44a, 54a is configured such that the corresponding pivot shafts 46, 56 can be forcibly fitted into the joint portion 46, 56 from under a slit of the joint portion, and thus constitutes a bearing portion. By fitting the pivot shafts 46 and 56 into the joint portions 44a and 54a, the valve bodies 44 and 54 are coupled to the respective arm portions 43a and 53a. The geometric center axis and the center of gravity, of each valve body 44, 54 are located above the axes of the corresponding pivot shafts 46, 56.

As shown in Figs. 3, 4 and 6, the guided portions 44b, 54b of each valve body 44, 54 comprise protrusions which guide the movement of the valve body 44, 54 by contact with the valve case pipe portion 42, 52, and radially extend from the outer periphery of the joint portion 44a, 54a. The outer diameter of each valve body 44, 54 is defined by the diameter of the circle circumscribing the guided portions 44b, 54b, and is smaller than the inner diameter of the valve case pipe portion 42, 52. The valve bodies 44 and 54 are guided in the vertical direction, with its pivoting motion about the pivot shafts 46 and 56 restricted, by the guided portions 44b and 54b and the inner wall surfaces of the valve case pipe portions 42 and 52. The radially extending guided portions 44b and 54b guide the valve bodies while restricting inclination of the valve bodies, and simultaneously allow smooth passage of water and air through the spaces between the valve bodies 44 and 54 and the respective valve case pipe portions 42 and 52 while the valve bodies 44 and 54 are open.

The seal portions 44c and 54c are flexible enough that the seal portions 44c and 54c can be water-tightly brought into close contact with the valve seats 41 and 51 under the buoyancy of the floats 43 and 53, even if the valve bodies 44 and 54 are inclined relative to the flow axes of the valve case pipe portions 42 and 52. The float valves 40 and 50 are considered closed when the seal portions 44c and 54c are water-tightly kept in close contact with the valve seats 41 and 51. The float valves 40 and 50 are considered open when the seal portions 44c and 54c are away from the respective valve seats 41 and 51. Fig. 4 shows a state in which the valve bodies 44 and 54 have been moved to the respective lower limits, where the guided portions 44b and 54b get caught on the inner wall surfaces of the valve case pipe portions 42 and 52, such that the floats 43 and 53 are unable to pivot further downward. That is, Fig. 4 shows the fully open positions of the float valves 40 and 50.

When, as shown in Figs. 3 to 5, the water level in the temporary tank 30 decreases with the interior of the raw water container 10 not at a negative pressure, the floats 43 and 53, which are afloat on the water in the temporary tank 30, pivot downward about the horizontal shafts 45 and 55. Between the inner wall surfaces of the air passage 23 and the water passage 22 and the respective valve bodies 44 and 54, spaces are defined which allow pivoting motion of the floats 43 and 53 within a predetermined angular range. Since the valve bodies 44 and 54 are coupled to the pivot shafts 46 and 56, and the pivot shafts 46 and 56 are moved together with the arm portions 43a and 53a, the above spaces allow the valve bodies 44 and 54 to be inclined relative to the vertically extending valve case pipe portions 42 and 52, until the guided portions 44b and 54b of the valve bodies 44 and 54 contact the inner wall surfaces of the valve case pipe portions 42 and 52. The valve bodies 44 and 54 are inclined about the pivot shafts 46 and 56 relative to the floats 43 and 53 when the floats pivots, while being restricted by the valve case pipe portions 42 and 52. The valve bodies 44 and 45 are thus moved downward away from the valve seats 41 and 51 as the pivot arms 46 and 56 move downward together with the arm portions 43a and 53a.

When the water level in the temporary tank 30 stops falling while the interior of the raw water container 10 is not at a negative pressure, the water level now begins to gradually rise because drinking water is fed from the water fall line 20. While the water level is rising, the floats 43 and 53 and the valve bodies 44 and 54 are pivoted about the horizontal shafts 45 and 55 and the pivot shafts 46 and 56 in the directions opposite to the pivoting directions while the water level is falling, such that the valve bodies 44 and 54 rise toward the valve seats 41 and 51 as the pivot shafts 46 and 56 rise together with the arm portions 43a and 53a. At this time, the pivoting motions of the valve bodies 44 and 54 about the horizontal shafts 45 and 55 are restricted by the valve case pipe portions 42 and 52, so that the valve bodies 44 and 54 are pivoted about the pivot shafts 46 and 56 relative to the arm portions 43a and 53a as the arm portions 43a and 53a are pivoted. This allows the valve bodies 44 and 54 to rise or fall to the position corresponding to the water level in the temporary tank 30.

When the variable-volume container body 12 of the raw water container 10 has been collapsed to the limit under the atmospheric pressure while the float valves 40 and 50 are open, an overshooting phenomenon occurs in which drinking water does not instantly stop but keeps flowing down through the water fall line 20 into the temporary tank 30, thus causing the variable-volume container body 12 to be collapsed excessively. After the overshooting, since the variable-volume container body 12 tends to elastically recover to the state before being excessively collapsed, a negative pressure is created in the raw water container 10. The flow sectional areas of the water passage 22 and the air passage 23, the inner diameters of the pipes, etc. are determined such that a negative pressure higher than the water fall pressure is reliably created in the raw water container 10 after the overshooting. Variations in negative pressure from one raw water container 10 to another, or depending upon other factors such as the use environment can be known beforehand based on sample testing.

When a negative pressure is initially created the raw water container 10, the negative pressure tends to raise the valve bodies 44 and 54 together with the drinking water in the valve case pipe portions 42 and 52. Since the valve case pipe portions 42 and 52 are only 10 mm or less in inner diameter and only 20 mm or less in length, the valve bodies 44 and 54, received in these pipe portions, are not heavy enough to resist the raising force due to the negative pressure by their weights alone. Also, since the above negative pressure is created in the raw water container 10 after the raw water container 10 has been collapsed to the limit under the atmospheric pressure, the water fall pressure is insufficient.

Since this water dispenser is configured such that a sufficiently high negative pressure is created in the variable-volume container body 12 irrespective of variations from one raw water container 10 to another, and how drinking water is used, air sucked in from inside the temporary tank 30 tends to move the valve bodies 44 and 54 upstream together with the drinking water filling the valve case pipe portions 42 and 52. The air sucked in from inside the tank 30 tends to also pull up the floats 43 and 53 because the floats 43 and 53 are coupled to the valve bodies 44 and 54 at the coupling portions 44a and 54a and the pivot shafts 46 and 56. As a result, the weights of the main float bodies 43b and 53b and part of the weights of the arm portions 43a and 53a act to pull the valve bodies 44 and 54 downstream, due to the principle of leverage. This pulling force is greater than the surface tension of the drinking water surrounding the valve bodies 44 and 54 in the valve case pipe portions 42 and 52. Thus, while the drinking water in the valve case pipe portions 42 and 52 is pushed up by air through the spaces between the guided portions 44b and 54b of the valve bodies 44 and 54 and the valve case pipe portions 42 and 52, the valve bodies 44 and 54 are also pushed by air, because the valve bodies 44 and 54 are being pulled downward under the weights of the floats 43 and 53. Thus, eventually, the valve bodies 44 and 54 are settled at the expected correct positions corresponding to the water level in the temporary tank 30. Since, in the above-described manner, the valve bodies 44 and 54 are forcibly moved to the positions corresponding to the water level in the temporary tank 30 by the weights of the floats 43 and 53, the float valve 40 and the second valve 50 will never be locked in the closed positions when the valves are not supposed to be closed. Thus, the water dispenser of this embodiment is configured such that a sufficiently high negative pressure is created in the raw water container 10 irrespective of variations from one raw water container 10 to another, and how drinking water is used, and further configured such that this negative pressure never balances with the water fall pressure. According to the present invention, it is not necessary to completely prevent the valve bodies 44 and 54 from rising above the positions corresponding to the water level. That is, there will be no problem even if the valve bodies 44 and 54 temporarily rise above the expected positions, provided the valve bodies 44 and 54 are not locked in the closed positions, and the valve bodies 44 and 54 can be eventually and forcibly brought back to their correct positions corresponding to the water level in the temporary tank 30 under the pulling force resulting from the weights of the floats 43 and 53.

After a negative pressure is created in the raw water container 10 due to overshooting, the negative pressure gradually decreases as air is sucked into the raw water container 10, and as a result, the amount of air sucked in gradually decreases. Immediately before the negative pressure disappears, the negative pressure may balance with the water fall pressure. However, since there is no possibility of the air passage 23 being unduly closed by the float valve 40, a slight difference will be created between the negative pressure and the water fall pressure due to fluctuations between the pressures in the air passage 32 and in the raw water container 10. This slight pressure difference will cause the drinking water in the air passage 23 to fall into the temporary tank 30, thus allowing air in the temporary tank 30 to flow into the air passage 23 and then into the raw water container 10 through the starting end opening 25 of the air passage 23 in the form of air bubbles, until the negative pressure disappears. Thus, with the arrangement of this embodiment, it is possible to prevent the negative pressure in the raw water container 10 from balancing with the water fall pressure, from the moment the negative pressure is created until it disappears. This in turn makes it possible to substantially completely empty the raw water container 10 in the spontaneous manner.

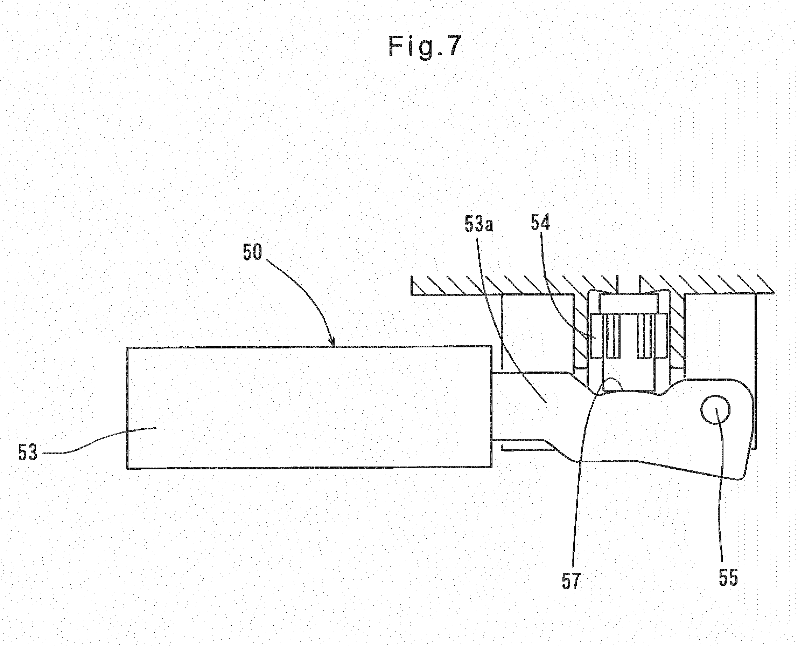

Fig. 7 shows a second embodiment of the present invention. In the following, only what differs from the first embodiment is described. In the second embodiment, the second valve body 54 of the second valve 50 comprises a floating valve body not coupled to the second float 53. The second valve body 54 is merely supported by a support surface 57 of the arm portion 53a such that when the support surface 57 rises or falls while pivoting about the horizontal shaft 55, the second valve body 54 rises or falls to the position corresponding to the water level in the temporary tank 30. Since the second valve body 54 is not coupled to the second float 53, the second valve 50 of the second embodiment is relatively simple in structure.

The technical scope of the present invention is not limited to the above-described embodiments, and the present invention includes every possible alteration that is within the range defined by the claims. By way of example, the pivot shafts may be formed on the high-strength members, or may be in the form of pins inserted in the arm portions and the joint portions. The horizontal shafts may also be changed similarly. The valve bodies may be connected to the floats not through the pivot shafts but by means of universal joints or chains. If a float valve is used as the second valve, a single common float may be afloat in the temporary tank and used both as the float of the float valve for opening and closing the air passage and the float of the second valve. In this arrangement, the second valve body may be a floating valve body.

### DESCRIPTION OF THE NUMERALS

10. Raw water container
14. Plug portion
20. Water fall line
22. Water passage
23. Air passage
24, 25. Starting end opening
30. Temporary tank
40. Float valve
42. Valve case pipe portion
43. Float
43a. Arm portion
43b. Main float body
44. Valve body
44a. Joint portion
44b. Guided portion
44c. Sealing portion
45. Horizontal shaft
46. Pivot shaft
50. Second valve
53. Second float
54. Second valve body

## Claims

1. A water dispenser comprising a replaceable raw water container (10), a water fall line (20) including a valve case pipe portion (42), and a temporary tank (30), wherein the raw water container (10), the water fall line (20), and the temporary tank (30) are configured such that drinking water in the raw water container (10) is fed by gravity into the temporary tank (30) through the water fall line (20), wherein the water dispenser further comprises a float valve (40) capable of automatically stopping a supply of water from the water fall line (20),
wherein the float valve (40) comprises a float (43) configured to be kept afloat on drinking water in the temporary tank (30), and a valve body (44) movable in the valve case pipe portion (42), and
wherein the raw water container (10) is configured to be spontaneously collapsed as an amount of drinking water remaining in the raw water container (10) decreases, and thereafter tend to suck in air in the temporary tank (30) by a self-recovery force of the raw water container (10),
**characterized in that** the float (43) is operatively coupled to the valve body (44) such that the valve body (44) is forcibly moved to a position corresponding to a water level in the temporary tank (30), by a weight of the float (43).

2. The water dispenser of claim 1, wherein the raw water container (10) includes a plug portion (14), and the water fall line (30) includes a piercing rod (21) pierced through the plug portion (14),
wherein the piercing rod (21) has an interior space divided into a water passage (22) and an air passage (23) which communicate with an interior of the raw water container (10),
wherein the water passage (22) has a starting end opening (24), and the air passage (23) has a starting end opening (25) smaller than the starting end opening (24) of the water passage (22), wherein the air passage (23) extends from the starting end opening (25) of the air passage (23) to an interior of the temporary tank (30), independently of the water passage (22), and
wherein the float valve (40) is configured to open and close the air passage (23).

3. The water dispenser of claim 2, further comprising a second valve (50) configured to open and close the water passage (22), and comprising a second float (53) configured to be kept afloat on the water in the temporary tank (30), and a second valve body (54) movable in the water passage (22),
wherein the second valve body (54) comprises a floating valve body not coupled to the second float (53).

4. The water dispenser of any of claims 1 to 3, wherein the float (43) of the float valve (40) is mounted to the temporary tank (30) so as to be pivotable about a horizontal shaft (45), and wherein the valve body (44) of the float valve (40) is coupled to the float (43) of the float valve (40), while being restricted by the valve case pipe portion (42), such that when the float (43) of the float valve (40) is pivoted, the valve body (44) of the float valve (40) is inclined relative to the float (43) of the float valve (40).
